# EUROPEAN PATENT SPECIFICATION

(11) **EP 0 861 035 B1**
(45) Date of publication and mention of the grant of the patent: **22.12.2004**
(21) Application number: 96903413.1
(22) Date of filing: 26.01.1996
(51) Int. Cl.: A23L 1/05, A23L 1/054, A23L 1/072, A23L 1/275

(54) **COLORED JELLY-TYPE SUBSTANCE, METHOD OF PREPARATION, AND COMPOSITION CONTAINING SAME**
GEFÄRBTE GELEE-ÄHNLICHE SUBSTANZ, VERFAHREN ZUR HERSTELLUNG UND DIESE ENTHALTENDE ZUSAMMENSETZUNG
SUBSTANCES GELATINEUSES COLOREES, LEUR PROCEDE D'OBTENTION ET COMPOSITIONS LES CONTENANT

(30) Priority: 27.01.1995 US 379413; 03.02.1995 US 383038
(43) Date of publication of application: 02.09.1998
(73) Proprietor: Bush Boake Allen Inc., Montvale, NJ 07656 (US)
(72) Inventor: LEWIS, James, A., Park Ridge, NJ 07656 (US)
(74) Representative: VOSSIUS & PARTNER
(86) International application number: PCT/US1996/000313
(87) International publication number: WO 1996/022701

(56) References cited:
- EP-A- 0 479 126
- WO-A-86/05363
- US-A- 3 947 604
- US-A- 3 969 536
- US-A- 4 368 208
- US-A- 4 500 552
- US-A- 4 647 470
- US-A- 5 260 083
- US-A- 5 376 396
- US-A- 5 387 427
- DATABASE WPI Section Ch, Week 7943 Derwent Publications Ltd., London, GB; Class B04, AN 79-78149B XP002058931 & JP 54 119 038 A (TAKEDA CHEM IND LTD) , 14 September 1979

## Description

This is a continuation-In-Part of a copending U.S. Patent Application filed on January 27, 1995 entitled Colored Jelly-Type Substance, Method of Preparation, and Composition Containing Same.

### Field of the Invention

This invention relates generally to jelly-type substances and in particular, to a colored jelly-type substance that can be incorporated into liquid compositions.

### Background of the Invention

Jelly drinks have been known for a long time. For example, Black Grass jelly drink is a traditional Chinese jelly drink. This led to the idea that pieces or bits of a jelly-type substance could be used in a liquid composition to give eye appeal, texture and other aesthetic advantages.

Jelly-type substances of the type referred to herein are hydrated hydrocolloids that can be incorporated into liquid compositions. In particular, liquid beverages are generally acidic and usually have a pH between about 2.5 and 6.0.

Japanese Patent Application No. 03130061 filed on June 3, 1991 discloses manufacturing methods for gel-containing acidic cold beverages. The gel particles disclosed therein are transparent and are suspended, for example, in a fruit juice beverage or a coffee drink.

It is difficult to color jelly-type substances that are to be incorporated into beverages because the color leaches into the surrounding liquid. Specifically, water soluble colors that might be used to color jelly-type substances will leach out into the surrounding beverage at an acidic pH. Since the only artificial colors that are permitted for general use in the food industry in the United States are water soluble, artificial colors are not useful for coloring jelly-type substances.

Lake colors are water soluble colors that have been precipitated onto an aluminum hydroxide support and are generally considered to be water-insoluble. However, lake colors are only water-insoluble at a neutral pH. At a low pH, such as that found in most beverages, the alumina dissolves and the water soluble color diffuses into the surrounding liquid beverage.

It would, therefore, be desirable to incorporate a stable color into a jelly-type substance so that the jelly-type substance can be incorporated into a liquid composition at an acidic pH.

It is thus a goal of the invention to provide colored jelly-type substances wherein the color is stable when the substance is incorporated into a liquid composition having an acidic pH.

Still other goals and advantages of the invention will in part be obvious and will in part be apparent from the specification.

### Summary of the Invention

Generally speaking, a jelly-type substance incorporating a water-insoluble color is provided. The colored jelly-type substance is incorporated in a liquid composition having an acidic pH between about 2.5 and 6.0 and the colors will remain incorporated in the jelly-type substance. The present invention is directed to a liquid composition according to claim 1.

The invention accordingly comprises the compositions possessing -the features, properties, and the relation of components, along with the several steps and the relation of one or more of such steps with respect to each of the others, which are exemplified in the following detailed disclosure, and the scope of the invention will be indicated in the claims.

### Detailed Description of the Preferred Embodiments

The present invention relates to jelly-type substances incorporating water-insoluble colors. As used herein, the term "jelly-type substance" is used in a broad sense to refer to any hydrated hydrocolloid. Jelly-type substances that are useful for incorporation into liquid compositions in accordance with the present invention are those that gel irreversibly.

Such jelly-type substances can be prepared by mixing water and a suitable gelling agent to form a liquid composition. The liquid composition can be gelled by heating and then cooling the composition. Alternatively, the liquid composition can be gelled by reacting the composition with mono- or di-valent ions such as calcium or sodium ions.

The water must be potable and is present in an amount between about 80% and 99.8% by weight of the substance.

Suitable gelling agents include, but are not limited to, gellan gum, xanthan gum, locust bean gum, pectin, alginates, carragheenans, starches, gelatin, and mixtures thereof. The gelling agent is used in an amount between about 0.1% and 5% by weight of the substance, preferably between about 0.2% and 1% by weight. In a preferred embodiment, gellan gum is used in an amount between about 0.1% and 0.5% by weight of the substance, preferably between about 0.2% and 0.4% by weight.

Jelly-type substances prepared using gellan gum are soft and break up immediately in the mouth. In addition, such substances are pasteurizable because the substance does not redissolve on heating. Finally, the texture of the jelly-type substance can be altered by varying the proportions of other gelling agents that are used in addition to the gellan gum as well as other components of the substance.

other water soluble components that may be included in the jelly-type substance include, for example, sweeteners, acids, ion providers or buffers, sequestrants, preservatives, and the like. The texture of the jelly-type substance is a function of the components of the substance and their proportions and is measured using standards of elasticity, brittleness, hardness, modulus and cohesiveness.

For example, carbohydrate sweeteners may be used to aid in dispersion of the gelling agent. In addition, the sweetener can also weight the jelly-type substance so that pieces of the substance do not float when incorporated into a liquid composition.

When sweeteners are utilized, the present invention contemplates the inclusion of those sweeteners well known in the art, including both natural and artificial sweeteners. Thus, sweeteners may be chosen from the following non-limiting list: sugars such as sucrose, glucose (corn syrup), dextrose, invert sugar, fructose, and mixtures thereof; saccharine and its various salts such as the sodium or calcium salt; cyclamic acid and its various salts such as the sodium salt; the dipeptide sweeteners such as aspartame; dihydrochalcone; glycyrrhizin; Stevia rebaudiana (Stevioside); and sugar alcohols such as sorbitol, sorbitol syrup, mannitol, xylitol, and the like. Also contemplated as an additional sweetener is the nonfermentable sugar substitute (hydrogenated starch hydrolysate) which is described in U.S. Reissue Pat. No. 26,959. Also contemplated is the synthetic sweetener 3,6-dihydro-6-methyl-1-1,2,3oxathiazin-4-one-2,2-dioxide particularly the potassium (Acesulfame-K), sodium and calcium salts thereof as described in German Patent No. 2,001,017.7.

The sweetener can be used in solid or in dissolved form and, when used, is generally present in an amount between about 0.1% and 20% by weight of the substance depending on the physical properties of the jelly-type substance that are desired.

Acids can be selected from food approved organic acids. For example, citric acid, maleic acid, tartaric acid, fumaric acid, lactic acid, and mixtures thereof can be used. When used, the acid is present in an amount between about 0.05% and 0.5% by weight of the substance, preferably between about 0.1% and 0.25% by weight.

A buffer can be selected from food approved buffering agents, including, for example, sodium citrate, potassium citrate, calcium acetate, and mixtures thereof. The buffer is used in an amount between about 0:02% and 0.2% by weight of the substance, preferably between about 0.05% and 0.1% by weight.

Sequestrating agents are used when necessary to correct ion imbalances that may be present in the water. Such an ion imbalance can cause difficulties with gellation such as a failure of the liquid composition including water and gelling agent to gel or premature gelling of the composition.

A preservative such as sodium benzoate, potassium sorbate, and mixtures thereof is optionally used in the substance. When used, the preservative is present in an amount up to 0.1% by weight.

In addition, a water-insoluble color is used in the preparation of the jelly-type substance in accordance with the invention. Suitable water-insoluble colors include, but are not limited to, annatto (yellow), curcumin (yellow), beta-carotene (yellow), carmine (red), and mixtures thereof.

Suitable water-insoluble colors also include colored natural materials such as oleoresins and pigments. Exemplary natural materials include, but are not limited to, chlorophyll (green), titanium dioxide (white), carbon black (black), cocoa powder (brown), paprika (red), spinach (green), and mixtures thereof.

The water insoluble colors are generally provided as a suspension in water or other suitable liquid media. Other suitable media include, but are not limited to, propylene glycol, vegetable oil, ethyl alcohol, and the like. In a preferred embodiment, a suspension or emulsion having between about 1% and 10% by weight water-insoluble color is used.

The final amount of color is, of course, determined by the final color of the jelly-type substance that is desired and manipulation of the amount of color required to achieve a desired result can readily be accomplished by one skilled in the art. In general, the amount of color will range between about 0.002% and 1% by weight of the jelly-type substance depending on the particular water-insoluble color that is used and the final color that is desired.

Exemplary amounts of some of the water-insoluble colors that would be considered to give attractive colors would be between about 0.01% and 0.04% by weight of carmine based on the total weight of the jelly-type substance, between about 0.002% and 0.02% by weight of beta-carotene based on the total weight of the jelly-like substance, and between about 0.6% and 1% by weight of cocoa powder based on the total weight of the jelly-type substance. Of course, a lesser amount of the water-insoluble color gives a lighter final color and a greater amount of the water-insoluble color gives a darker final color.

To prepare the colored jelly-type substance in accordance with the invention, all of the dry materials, with the exception of the color, are blended and added to the water. The water and dry materials are stirred until a homogeneous dispersion is formed. The temperature of the dispersion is raised to between about 160° and 190°F and maintained at that temperature until the gum is fully hydrated. The solution will be clear when the gum is fully hydrated.

The water-insoluble color is added in liquid form. If required, a suitable acid such as citric acid is added to bring the pH to between about 3.5 and 4.0. The mixture is cooled to between about 140° and 150°F, poured into a container, and allowed to set. After the jelly-like substance has set, it can be cut into any desired shape by conventional means that are well known to those skilled in the art. The cut jelly-like substance can be preserved by the addition of a preservative such as sodium benzoate.

In an alternate embodiment, the jelly-like substance is prepared using excess buffer. This prevents the liquid composition from gelling when it is cooled. The resulting liquid composition is then gelled by contacting the composition with a solution of a suitable mono- or di-valent salt such as calcium chloride or sodium chloride. In a further alternate embodiment, the composition is gelled by contacting the composition with a strong acid solution such as a 2% solution of citric acid in water.

The cut pieces of jelly-like substance are incorporated in a liquid composition having a pH between about 2.5 and 6 in an amount between about 1% and 10% by weight of the composition, preferably in an amount between about 5% and 8% by weight. The liquid composition can be hot or cold, carbonated or non-carbonated, alcoholic or non-alcoholic, caffeinated or non-caffeinated, clear or cloudy. Suitable liquid compositions include, but are not limited to, soda, coffee, tea, beer, milk, mouthwash, and the like. The jelly-like substance remains discrete and retains its color during and subsequent to processing of the liquid composition.

The following Examples are presented for purposes of illustration only and are not to be construed in a limiting sense.

### Example 1

Nine hundred (900) mls. of cold water were measured into a weighed glass beaker. A dry blend of 80g granulated sucrose, 4g gellan gum, 1g sodium citrate, and 1g sodium benzoate was prepared and slowly added to the water with agitation. When all of the ingredients were suspended in the water, the temperature was raised to 180°F with gentle stirring.

The liquid was maintained at 180°F for about 10 minutes until visual inspection indicated that hydration of the gum was complete. A suspension of 0.28g carmine powder in 5.32ml water was added and the mixture was stirred until complete dispersion of the color was achieved. The heat source was removed and the beaker was cooled in a cold water bath until a temperature of 150°F was achieved. A solution of 1.7g anhydrous citric acid in 10ml water was added with agitation and the contents of the beaker were brought up to 1000g with water. The resultant red liquid was poured onto a flat smooth impervious surface fenced at 44mm per side to a depth of approximately 5mm.

The red liquid was allowed to cool to ambient room temperature and formed a jelly-type substance. The jelly-type substance was cut into 5mm cubes using a suitable roller-cutter.

The resulting pieces of jelly-type substance were incorporated into a non-carbonated beverage at a level of 5% by weight. The beverage was bottled, capped, and pasteurized at 180°F for ten (10) minutes and cooled.

### Example 2

Nine hundred and ninety-three (993) ml water were measured into a suitable container. The water was agitated and 2g gellan gum together with 1.3g sodium citrate were added. Agitation was continued until the gum was thoroughly dispersed. Four (4) ml of a 0.7% suspension of beta-carotene in water was added and dispersed thoroughly.

The resulting orange-yellow liquid was heated to 120°F in order to fully hydrate the gum and the liquid was cooled to ambient room temperature, approximately 68°F. The liquid remained mobile and was poured into a suitable burette for producing small droplets. Droplets of a suitable size were allowed to form and were dropped into an agitated bath of 1-1/2% calcium chloride solution. The droplets hardened into discrete and easily handlable spheres on contact with the calcium chloride solution. The spheres were removed from the solution with a suitable mesh, washed clean of surface calcium chloride, and used in beverages as described in Example 1.

### Example 3

Brown colored jelly spheres were prepared as described in Example 2, except that 12g of a 50% slurry of cocoa powder defatted was used in place of the beta-carotene in water.

### Example 4

White jelly cubes were prepared as described in Example 1, except that a suspension of 1.5g titanium dioxide in 8.5 ml water was used in place of the carmine powder.

## Claims

1. A liquid composition comprising:
an acidic liquid having a pH between 2.5 and 6.0; and
a colored gel comprising:
water in an amount between 80% and 99.8% by weight of the gel;
a gelling agent consisting of gellan gum and optionally an additional gelling agent selected from the group consisting of pectin, alginates, carragheenans, starches, gelatin, and mixtures thereof wherein the gelling agent is present in an amount between 0.1% and 5% by weight of the gel; and
a water-insoluble color, wherein the water-insoluble color is stable when the gel is incorporated into a liquid composition having an acidic pH wherein the water-insoluble color is used in an amount between 0.002% and 1% by weight of the gel.

2. The liquid composition of claim 1 wherein the gel further includes a sweetener.

3. The liquid composition of claim 2 wherein the sweetener is present in an amount between 0.1 % and 20% by weight of the gel.

4. The liquid composition of claim 3 wherein the sweetener is selected from the group consisting of cane sugar, sucrose, glucose, dextrose, invert sugar, fructose, saccharine, saccharine sodium salt, saccharine calcium salt, aspartame, dihydrochalcone, glycyrrhizin, Stevia rebaudia, sorbitol, sorbitol syrup, mannitol, xylitol, hydrogenated starch hydrolysate, 3,6-dihydro-6-methyl-1-1,2,3-oxathiazin-4-one-2,2-dioxide and its potassium and sodium salts, and mixtures thereof.

5. The liquid composition of any one of claims 1 to 4 wherein the gel further includes a buffer.

6. The liquid composition of claim 5 wherein the buffer is present in an amount between 0.02% and 0.2% by weight.

7. The liquid composition of claim 6 wherein the buffer is selected from the group consisting of sodium citrate, potassium citrate, calcium acetate, and mixtures thereof.

8. The liquid composition of any one of claims 1 to 7 wherein the gel further includes a preservative selected from the group consisting of sodium benzoate, potassium sorbate, and mixtures thereof.

9. The liquid composition of claim 8 wherein the preservative is used in an amount up to 0.1% by weight of the gel.

10. The liquid composition of any one of claims 1 to 9 wherein the water-insoluble color is selected from the group consisting of annatto, curcumin, beta-carotene, carmine, chlorophyll, titanium dioxide, carbon black, cocoa powder, paprika, spinach, and mixtures thereof.

11. The liquid composition of any one of claims 1 to 10 wherein the water-insoluble color is provided as a suspension in a solvent selected from the group consisting of water, propylene glycol, vegetable oil, ethyl alcohol, and mixtures thereof.

## Patentansprüche

1. Flüssige Zusammensetzung, umfassend:
eine saure Flüssigkeit mit einem pH-Wert zwischen 2,5 und 6,0; und ein gefärbtes Gel, umfassend
Wasser in einer Menge zwischen 80 und 99,8 Gew.-% bezogen auf das Gel;
ein Geliermittel, das aus Gellan-Gummi und gegebenenfalls einem zusätzlichen Geliermittel besteht, das ausgewählt ist aus der Gruppe bestehend aus Pektin, Alginaten, Karragheenen, Stärken, Gelatine und Mischungen davon, wobei das Geliermittel in einer Menge zwischen 0,1 und 5 Gew.-% bezogen auf das Gel vorhanden ist; und
einen wasserunlöslichen Farbstoff, wobei der wasserunlösliche Farbstoff stabil ist, wenn das Gel in eine flüssige Zusammensetzung mit einem sauren pH-Wert eingebracht wird, wobei der wasserunlösliche Farbstoff in einer Menge zwischen 0,002 und 1 Gew.-% bezogen auf das Gel verwendet wird.

2. Flüssige Zusammensetzung nach Anspruch 1, worin das Gel weiterhin einen Süßstoff beinhaltet.

3. Flüssige Zusammensetzung nach Anspruch 2, worin der Süßstoff in einer Menge zwischen 0,1 und 20 Gew.-% bezogen auf das Gel vorhanden ist.

4. Flüssige Zusammensetzung nach Anspruch 3, wobei der Süßstoff ausgewählt ist aus der Gruppe bestehend aus: Rohrzucker, Saccharose, Glucose, Dextrose, Invertzucker, Fructose, Saccharin, Saccharin-Natiumsalz, Saccharin-Calciumsalz, Aspartam, Dihydrochalcon, Glycyrrhizin, Stevia Rebaudia, Sorbit, Sorbitsirup, Mannit, Xylit, hydriertes Stärkehydrolysat, 3,6-Diyhdro-6-methyl-1-1,2,3-oxathiazin-4-on-2,2-dioxid und dessen Kalium- und Natriumsalze und Mischungen davon.

5. Flüssige Zusammensetzung nach einem der Ansprüche 1 bis 4, wobei das Gel weiterhin einen Puffer beinhaltet.

6. Flüssige Zusammensetzung nach Anspruch 5, wobei der Puffer in einer Menge zwischen 0,02 und 0,2 Gew.-% vorhanden ist.

7. Flüssige Zusammensetzung nach Anspruch 6, wobei der Puffer ausgewählt ist aus der Gruppe bestehend aus Natriumcitrat, Kaliumcitrat, Calciumacetat und Mischungen davon.

8. Flüssige Zusammensetzung nach einem der Ansprüche 1 bis 7, die weiterhin ein Konservierungsmittel beinhaltet, das ausgewählt ist aus der Gruppe bestehend aus Natriumbenzoat, Kaliumsorbat und Mischungen davon.

9. Flüssige Zusammensetzung nach Anspruch 8, wobei das Konservierungsmittel in einer Menge von bis zu 0,1 Gew.-% bezogen auf das Gel verwendet wird.

10. Flüssige Zusammensetzung nach einem der Ansprüche 1 bis 9, wobei der wasserunlösliche Farbstoff ausgewählt ist aus der Gruppe bestehend aus Annatto, Kurkumin, beta-Karotin, Karmin, Chlorophyll, Titandioxid, Rußschwarz, Kakaopulver, Paprika, Spinat und Mischungen davon.

11. Flüssige Zusammensetzung nach einem der Ansprüche 1 bis 10, wobei der wasserunlösliche Farbstoff als eine Suspension in einem Lösungsmittel zur Verfügung gestellt wird, das ausgewählt ist aus der Gruppe bestehend aus Wasser, Propylenglycol, Pflanzenöl, Ethanol und Mischungen davon.

## Revendications

1. Composition liquide comprenant :
un liquide acide ayant un pH entre 2,5 et 6,0 ; et
un gel coloré comprenant :
de l'eau en une quantité comprise entre 80 % et 99,8 % en poids du gel ;
un agent gélifiant consistant en une gomme Gellan et éventuellement un agent gélifiant supplémentaire sélectionné dans le groupe constitué de pectine, des alginates, des carragénines, des amidons, de la gélatine, et de mélanges de ceux-ci, dans laquelle l'agent gélifiant est présent en une quantité comprise entre 0,1 % et 5 % en poids du gel ;
un colorant insoluble dans l'eau, ledit colorant insoluble dans l'eau étant stable lorsque le gel est incorporé dans une composition liquide ayant un pH acide, dans laquelle le colorant insoluble dans l'eau est utilisé en un quantité comprise entre 0,002 % et 1 % en poids du gel.

2. Composition liquide selon la revendication 1, dans laquelle le gel inclut en outre un édulcorant.

3. Composition liquide selon la revendication 2, dans laquelle l'édulcorant est présent en une quantité comprise entre 0,1 % et 20 % en poids du gel.

4. Composition liquide selon la revendication 3, dans laquelle l'édulcorant est sélectionné dans le groupe constitué de sucre de canne, sucrose, glucose, dextrose, sucre inverti, fructose, saccharine, sel de sodium de la saccharine, sel de calcium de la saccharine, aspartame, dihydrochalcone, glycyrrhizine, stévia rebaudia, sorbitol, sirop de sorbitol, mannitol, xylitol, hydrolysat d'amidon hydrogéné, 3,6-dihydro-6-méthyl-1-1,2,3-oxathiazin-4-one-2,2-dioxyde et ses sels de potassium et de sodium, et de mélanges de ceux-ci.

5. Composition liquide selon l'une quelconque des revendications 1 à 4, dans laquelle le gel inclut en outre un tampon.

6. Composition liquide selon la revendication 5, dans laquelle le tampon est présent en une quantité comprise entre 0,02 % et 0,2 % en poids.

7. Composition liquide selon la revendication 6, dans laquelle le tampon est sélectionné dans le groupe constitué de citrate de sodium, citrate de potassium, acétate de calcium et de mélanges de ceux-ci.

8. Composition liquide selon l'une quelconque des revendications 1 à 7 dans laquelle le gel inclut en outre un agent de conservation sélectionné parmi le groupe constitué de benzoate de sodium, sorbate de potassium, et de mélanges de ceux-ci.

9. Composition liquide selon la revendication 8, dans laquelle l'agent de conservation est utilisé en une quantité jusqu'à 0,1 % en poids du gel.

10. Composition liquide selon l'une quelconque des revendications 1 à 9 dans laquelle le colorant insoluble dans l'eau est sélectionné dans le groupe constitué de annatto, curcumine, bêta-carotène, carmin, chlorophylle, dioxyde de titane, noir de charbon, poudre de cacao, paprika, épinard, et de mélanges de ceux-ci.

11. Composition liquide selon l'une quelconque des revendications 1 à 10 dans laquelle le colorant insoluble dans l'eau est fourni sous formé de suspension dans un solvant sélectionné parmi le groupe constitué d'eau, propylène glycol, huile végétale, alcool éthylique, et de mélanges de ceux-ci.
